(19) Europäisches Patentamt
European Patent Office
Office européen des brevets

(11) Veröffentlichungsnummer: **0 472 064 A2**

(12) # EUROPÄISCHE PATENTANMELDUNG

(21) Anmeldenummer: **91113387.4**

(22) Anmeldetag: **09.08.91**

(51) Int. Cl.5: **C08L 69/00**, C08K 7/14, //(C08L69/00,23:08),(C08L69/00, 51:06)

(30) Priorität: **22.08.90 DE 4026475**

(43) Veröffentlichungstag der Anmeldung: **26.02.92 Patentblatt 92/09**

(84) Benannte Vertragsstaaten: **DE FR GB IT**

(71) Anmelder: **BAYER AG**

**W-5090 Leverkusen 1 Bayerwerk(DE)**

(72) Erfinder: **Horn, Klaus, Dr.**
**Bodelschwinghstrasse 12**
**W-4150 Krefeld(DE)**
Erfinder: **Kircher, Klaus, Dr.**
**Alfred-Kubin-Strasse 3**
**W-5090 Leverkusen 1(DE)**

(54) **Ternäre Mischungen.**

(57) Gegenstand der vorliegenden Erfindung sind ternäre Mischungen enthaltend Polycarbonate und/oder Polyestercarbonate, Glasfasern und $C_2$-$C_8$-Olefin-Acrylsäureester-Maleinsäureanhydrid-Terpolymere sowie gegebenenfalls übliche Additive, sowie ein Verfahren zur Herstellung der ternären Mischungen gegebenenfalls einschließlich der üblichen Additive.

EP 0 472 064 A2

Gegenstand der vorliegenden Erfindung sind ternäre Mischungen, enthaltend

A) 49,9 bis 96,9 Gew.-%, vorzugsweise
59,9 bis 96,9 Gew.-% und insbesondere
79,6 bis 94,9 Gew.-% an thermoplastischen, aromatischen Polycarbonaten und/oder thermoplastischen, aromatischen Polyestercarbonaten,

B) 3 bis 50 Gew.-%, vorzugsweise
3 bis 40 Gew.-% und insbesondere
5 bis 20 Gew.-% an Glasfasern und

C) 0,1 bis 10 Gew.-%, vorzugsweise
0,1 bis 5 Gew.-% und insbesondere
0,4 bis 3 Gew.-% an $C_2$-$C_8$-Olefin-Acrylsäureester-Maleinsäureanhydrid-Terpolymeren,

wobei die Summe der Gew.-% der Komponenten A) + B) + C) jeweils 100 Gew.-% beträgt.

Glasfaserhaltige Polycarbonate mit einem Zusatz von Polyanhydrid-Harzen sind bekannt (siehe US-Patent 4 420 584 und EP-B1-0 063 769). Diese Formmassen haben eine verbesserte Schlagzähigkeit und eine größere Bruchdehnung. Im Heißluftalterungstest verfärben sich diese Polycarbonatformmassen jedoch stark, was mit einem molekularen Abbau der Polycarbonatmatrix einhergeht.

Demgegenüber haben die erfindungsgemäßen Mischungen neben einer guten Schlagzähigkeit auch einen stabilen Farbort nach Heißluftalterung.

Die Komponenten

Die Polycarbonatkomponente A) ist sowohl ein Homocopolycarbonat als auch ein Copolycarbonat, wobei auch Mischungen von Polycarbonaten sowohl von Homopolycarbonaten als auch von Copolycarbonaten geeignet sind.

Die Polycarbonate gemäß Komponente A) sollen Gewichtsmittelmolekulargewichte $M_w$ (ermittelt beispielsweise in bekannter Weise über die relative Lösungsviskosität oder durch Gelchromatographie nach vorheriger Eichung) von 10.000 bis 200.000, vorzugsweise von 20.000 bis 80.000 haben.

Die Polycarbonate gemäß Komponente A) sind solche auf Basis der Diphenole der Formel a)

HO—D—OH a),

worin D ein zweibindiger aromatischer Rest von 6 bis 50 C-Atomen, insbesondere von 12 bis 45 C-Atomen, ist, der noch Heteroatome oder C-haltige Heterosegmente enthalten kann, welche nicht unter den 6 bis 50 C-Atomen subsummiert sind.

Die Polycarbonate haben somit bifunktionelle Struktureinheiten der Formel b)

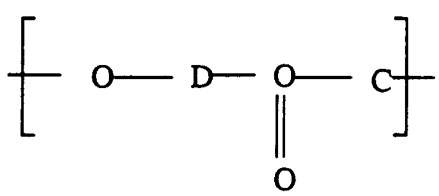

b),

worin D die vorstehend genannte Bedeutung hat.

Die Polycarbonate der Komponente A) können darüber hinaus in bekannter Weise (siehe beispielsweise DE-PS 2 500 092 und US-PS 4 185 009) durch den Einbau geringer Mengen, vorzugsweise zwischen 0,05 und 2 Mol-%, bezogen auf eingesetzte Diphenole, an drei oder mehr als dreifunktionellen Verbindungen, beispielsweise solchen mit drei oder mehr als drei OH-Gruppen verzweigt sein.

Einige der verwendeten Verbindungen mit drei oder mehr als drei phenolischen Hydroxygruppen sind beispielsweise Phloroglucin, 4,6-Dimethyl-2,4,6-tri-(4-hydroxyphenyl)-heptan, 1,3,5-Tri-(4-hydroxyphenol)-benzol, 1,1,1-Tri-(4-hydroxyphenyl)-ethan, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4'-dihydroxytriphenyl-methyl)-benzol.

Einige der sonstigen dreifunktionellen Verbindungen sind 2,4-Dihydroxybenzoesäure,Trimesinsäure, Cyanurchlorid und 3,3-Bis-(4-hydroxy-3-methyl-phenyl)-2-oxo-2,3-dihydroindol.

Geeignete Diphenole der Formel a) sind beispielsweise solche der Formel a)1)

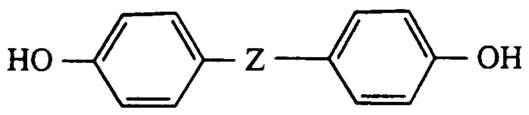

a)1),

worin Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)-methylen-Rest, -S-, $-SO_2$, -CO- oder -O- ist, wobei die durch Z verknüpfte Phenylen-Kerne noch durch Methyl, Brom oder Chlor ein- oder zweifach substituiert sein können.

Geeignete Diphenole der Formel a) sind auch solche der Formel a)2)

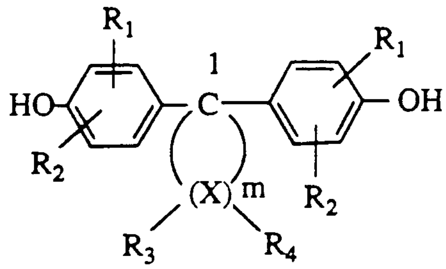

a)2),

worin

- $R_1$ und $R_2$ unabhängig voneinander Wasserstoff, Halogen, bevorzugt Chlor oder Brom, $C_1$,-$C_6$-Alkyl, $C_5$-$C_6$-Cycloalkyl, $C_6$-$C_{10}$-Aryl, bevorzugt Phenyl, und $C_7$-$C_{12}$-Alkyl, bevorzugt Phenyl-$C_1$-$C_4$-Alkyl, insbesondere Benzyl,
- m eine ganze Zahl von 4 bis 7, bevorzugt 4 oder 5,
- $R_3$ und $R_4$, für jedes X individuell wählbar, unabhängig voneinander Wasserstoff oder $C_1$-$C_6$-Alkyl

und

- X Kohlenstoff bedeuten,

mit der Maßgabe, daß an mindestens einem Atom X $R_3$ und $R_4$ gleichzeitig Alkyl bedeuten.

Hierbei sind an 1 bis 2 Atomen X, insbesondere nur an einem Atom X, $R_3$ und $R_4$ gleichzeitig Alkyl. Bevorzugter Alkylrest ist Methyl; die X-Atome in $\alpha$-Stellung zu dem diphenyl-substituierten C-Atom (C-1) sind bevorzugt nicht dialkylsubstituiert, dagegen ist die Alkyl-disubstitution in $\beta$-Stellung zu C-1 bevorzugt.

Insbesondere sind hierbei bevorzugt Dihydroxydiphenylcycloalkane mit 5 und 6 Ring-C-Atomen im cycloaliphatischen Rest (m = 4 oder 5 in Formel a)2)) wie beispielsweise die Diphenole der Formeln

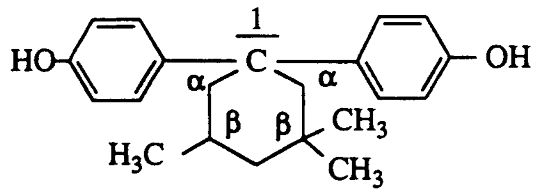

a)2)1),

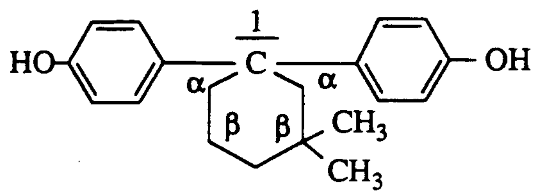

a)2)2) und

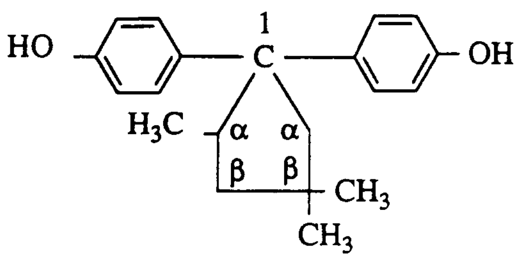

a)2)3,

wobei das 1,1-Bis-(4-hydroxyphenyl)-3.3.5-trimethylcyclohexan (Formel a)2)1)) besonders bevorzugt ist.

Die Diphenole der Formel a)2), ihre Herstellung und ihre Verwendung, gegebenenfals in Kombination mit anderen Diphenolen, zur Herstellung von Homopolycarbonaten und Copolycarbonaten ist Gegenstand der deutschen Offenlegungsschrift 3 832 396 (Le A 26 344).

Die Herstellung der übrigen Polycarbonate der Komponente A), beispielsweise aus den Diphenolen der Formel a)1) ist auch literaturbekannt. (Siehe dazu beispielsweise H. Schnell, Chemistry and Physics of Polycarbonates, Interscience Publishers, New York, 1964 oder US-Patente 3 028 365 und 3 275 601.)

Beispiele für Diphenole der Formel a) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole,
sowie deren kernalkylierte und kernhalogenierte Verbindungen.

Diese und weitere geeignete Diphenole der Formel a) sind z.B. in den US-PS 3 028 365, 2 999 835, 3 148 182, 3 275 601, 2 991 273, 3 271 367, 3 062 781, 2 970 131 und 2 999 846, in den deutschen Offenlegungsschriften 1 570 703, 2 063 050, 2 063 052, 2 211 095, der französischen Patentschrift 1 561 518 und in der Monographie "H. Schnell, Chemistry and Physics of Polycarbonates, Interscience Publishers, New York 1964" beschrieben.

Bevorzugte Diphenole der Formel a) sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4hydroxyphenyl)-cyclohexan,
α,α'-Bis-(4-hydroxyphenyl)-p-diisopropylbenzol,
2,2-Bis-(3-methyl-4-hydroxyphenyl)-propan,

2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan
sowie die Diphenole a)2)1), a)2)2) und a)2)3).

Besonders bevorzugte Diphenole der Formel a) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan der Formel a)2)1).

Insbesondere sind 2,2-Bis-(4-hydroxyphenyl)-propan und 1,1-Bis-(4-hydroxyphenyl)-3,3,5-trimethylcyclohexan bevorzugt.

Die Diphenole der Formel a) können sowohl einzeln als auch im Gemisch eingesetzt werden.

Als Kettenabbrecher zur Regelung des Molekulargewichts dienen in bekannter Weise monofunktionelle Verbindungen in üblichen Konzentrationen. Geeignete Verbindungen sind z.B. Phenol, tert-Butylphenole oder andere Alkyl-$C_1$-$C_7$-substituierte Phenole.

Zur Regelung des Molekulargewichts sind insbesondere kleine Mengen Phenole der Formel c) geeignet

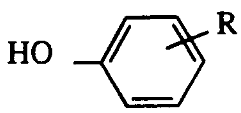

c),

worin R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Thermoplastische, aromatische Polyestercarbonate gemäß Komponente A) der vorliegenden Erfindung sind solche erhältlich in bekannter Weise an Diphenolen, Phosgen, aromatischen Dicarbonsäuredichloriden, Kettenabbrechern und gegebenenfalls Verzweigern. Geeignete Diphenole sind die fur die Polycarbonat-Herstellung bereits genannten der Formel a).

Geeignete Kettenabbrecher sind beispielsweise Monophenole, wie sie auch für die Polycarbonat-Herstellung geeignet sind.

Geeignete Verzweiger sind die vorstehend für die Polycarbonat-Herstellung genannten drei oder mehr als dreifunktionellen Verbindungen, wobei neben phenolischer Verbindung darüber hinaus auch aromatische Tricarbonsäurechloride oder aromatische Tetracarbonsäurechloride oder Säurechloride von noch höherwertigen, aromatischen Carbonsäuren eingesetzt werden können. Sie werden in Mengen von 0,01 bis 1 Mol-%, bezogen auf eingesetzte aromatische Dicarbonsäuredichloride, eingesetzt, während bei Einsatz von phenolischen Verzweigern deren Menge von 0,01 bis 1 Mol-% sich auf eingesetzte Diphenole zur Herstellung des aromatischen Polyestercarbonates bezieht.

Geeignete aromatische Dicarbonsäuredichloride sind Terephthalsäuredichlorid, Isophthalsäuredichlorid, o-Phthalsäuredichlorid, Diphenyl-dicarbonsäure-dichlorid, Naphthalindicarbonsäure-dichlorid und deren Gemische.

Bevorzugte Gemische sind solche von Terephthalsäuredichloriden mit Isophthalsäuredichloriden im Verhältnis 20:1 bis 1:20, insbesondere von 7:3 bis 3:7.

Die aromatischen Polyestercarbonate im Sinne der vorliegenden Erfindung haben bis etwa 80 Mol-%, vorzugsweise bis etwa 50 Mol-% Carbonatgruppen, bezogen auf die Molsumme an Carbonatgruppen und aromatischen Carbonsäureestergruppen.

Sowohl der Ester- als auch der Carbonatanteil der erfindungsgemäßen aromatischen Polyestercarbonate kann in Form von Blöcken oder statistisch verteilt im Polykondensat vorliegen.

Die relative Lösungsviskosität ($\eta_{rel}$) der aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25 °C).

Die Polyestercarbonatkomponente A) ist sowohl ein Homopolyestercarbonat als auch ein Polyestercarbonat auf Basis mehrerer Diphenole, sowohl ein Polyestercarbonat auf Basis nur einer aromatischen Dicarbonsäure als auch auf Basis mehrerer Dicarbonsäuren. Die Polyestercarbonate der Komponente A) sowie ihre Herstellung sind bekannt (siehe beispielsweise EP-OS 0 036 080 (Le A 20 203), DE-OS 3 007 934 (Le A 20 203), US-PS 3 169 121 sowie deutsche Patentanmeldung P 3 903 103 .9 (Le A 26 313) für die Polyestercarbonate aus den Diphenolen der Formel a)2)).

Geeignete Glasfasern für die Formmassen der vorliegenden Erfindung sind alle im Handel erhältlichen Glasfasersorten und -typen, also geschnittene Glassorten (Langglasfaser), sofern sie durch geeignete Schlichten Polycarbonat-verträglich ausgerüstet sind. Die zur Herstellung der Formmassen verwendeten Glasfasern sind aus E-Glas hergestellt. Unter E-Glas versteht man nach DIN 1259 ein Aluminium-Bor-Silikat-Glas, mit einem Alkalioxid-Gehalt unter 1 Gew.%. Die verwendeten Glasfasern haben einen Durchmesser zwischen 8-20 µm und einer Länge von 3-6 mm (chopped strands). Gegebenenfalls kann auch geschlichtetes oder ungeschlichtetes Kurzglas Verwendung finden.

Geeignete $C_2$-$C_8$-Olefine zur Herstellung der erfindungsgemäßen Terpolymeren gemäß Komponente C) sind beispielsweise Ethylen, Propylen, Hexen, Butadien, Isopren und Chloropren.

Acrylsäureester zur Herstellung der erfindungsgemäßen Terpolymeren gemäß Komponente c) sind beispielsweise Ester der Acrylsäure mit $C_1$-$C_8$-Alkoholen wie Methanol, Ethanol, n-Butanol und n-Octanol.

Erfindungsgemäß geeignete Mengenverhältnisse für die Herstellung der Terpolymeren sind

1) 40 bis 90 Gew.% $C_2$-$C_8$-Olefine,

2) 5 bis 40 Gew.% Acrylsäureester und

3) 0,1 bis 30 Gew.%, vorzugsweise 0,1 bis 20 Gew.% und insbesondere 1 bis 15 Gew.% Maleinsäureanhydrid, wobei die Summe der Gew.% der Komponenten 1) + 2) + 3) jeweils 100 Gew.% ist.

Die erfindungsgemäß geeigneten Terpolymeren gemäß Komponente C) sind kautschukartig, d.h. sie haben elastische Eigenschaften.

Die Terpolymeren der Komponente C) sind entweder Copolymerisate oder Pfropfpolymerisate.

Hierbei kann das Maleinsäureanhydrid während der Synthese mit dem Ethylen und dem Acrylsäureester terpolymerisiert werden oder durch übliche Pfropfreaktion auf eine vorgebildete Pfropfgrundlage polymerisiert werden.

Die erfindungsgemäßen säureanhydridgruppenhaltigen Terpolymeren können nach allen bekannten Polymerisationsverfahren (Emulsions-, Lösungs-, Masse-, Suspensions-, Fällungspolymerisation) sowie nach Kombinationen aus diesen Verfahren hergestellt werden.

Bei der Herstellung der säureanhydridgruppenhaltigen Terpolymeren durch Pfropfreaktion wird das auszupfropfende Monomere in Gegenwart der vorgebildeten Pfropfgrundlage polymerisiert.

Es bildet sich dabei neben dem eigentlichen Pfropfpolymerisat auch freies Homopolymerisat. Als Pfropfprodukt wird somit jeweils die Summe der eigentlichen Pfropfcopolymerisate und der freien Polymerisate verstanden. Die Menge des aufgepfropften Monomeren und sein Molekulargewicht kann in weiten Grenzen durch Variationen der Polymerisationsbedingungen beeinflußt werden. Hierzu gehören vor allem: Art des Polymerisationsverfahrens, Temperatur, Aktivatorsystem, Molekulargewichtsregler, Rührbedingungen und Art der Monomer-Dosierung.

Besonders bevorzugte Terpolymerisate sind solche, die hergestellt sind aus

1) 40 bis 90 Gew.% Ethylen,

2) 5 bis 40 Gew.% eines oder mehrerer Acrylsäure-$C_1$-$C_8$-alkylester und

3) 0,1 bis 30 Gew.%, vorzugsweise 0,1 bis 20 Gew.% und besonders bevorzugt 1 bis 15 Gew.% Malinsäureanhydrid,

wobei die Summe der Gew.% der Komponenten 1) + 2) + 3) jeweils 100 Gew.% ist.

Die erfindungsgemäß einzusetzenden Terpolymeren sollen im wesentlichen unvernetzt sein, d.h. sie sollen zu mindestens 90% in heißen Lösungsmitteln wie z.B. Toluol, Ethylbenzol oder Tetrachlorethylen löslich sein. Die Terpolymeren gemäß Komponente C) besitzen Schmelzpunkte von 40 bis 160 °C, vorzugsweise von 60 bis 150 °C. Die Schmelzpunkte wurden nach der DSC-Methode (Differential-Scanning-Calorimeter-Methode) bestimmt.

Die Vicat-Temperaturen der erfindungsgemäß einzusetzenden Terpolymeren liegen im Bereich zwischen 30 bis 110 °C, vorzugsweise 35 bis 90 °C, gemessen nach DIN 53 460.

Die Herstellung der erfindungsgemäßen Mischungen aus den Komponenten A), B) und C) erfolgt in der Weise, daß man das Polycarbonat mit den Glasfasern und dem säureanhydridgruppenhaltigen Terpolymer bei Temperaturen zwischen 260 °C und 360 °C, vorzugsweise zwischen 280 °C und 320 °C schmelzcompoundiert und das erhaltene Gemisch in bekannter Weise abkühlt und granuliert.

Für die Herstellung der erfindungsgemäßen Mischungen können die üblichen Zweiwellenextruder verwendet werden, die zum Mischen von Polycarbonat und Glasfasern geeignet sind.

Gegenstand der vorliegenden Erfindung ist somit auch ein Verfahren zur Herstellung der erfindungsgemäßen Mischungen aus den Komponenten A), B) und C), das dadurch gekennzeichnet ist, daß man das Polycarbonat mit den Glasfasern und dem säureanhydridgruppenhaltigen Terpolymer bei Temperaturen zwischen 260°C und 360°C, vorzugsweise zwischen 280°C und 320°C schmelzcompoundiert und das erhaltene Gemisch in bekannter Weise abkühlt und granuliert.

Den erfingsgemäßen Mischungen können noch die für die Komponenten A), B) und C) bekannten Additive in bekannten Mengen vor oder während oder nach der Herstellung der erfindungsgemäßen Mischungen in üblichen Mengen eingearbeitet werden.

Geeignete Additive sind Füllstoffe, wie beispielsweise mineralische Füllstoffe, Weichmacher, Fließmittel, Stabilisatoren gegen UV-Licht, Hitze, Feuchtigkeit und gegen $O_2$-Einwirkung, Pigmente und Flammschutzmittel.

Gegenstand der vorliegenden Erfindung sind somit auch Mischungen bestehend aus den erfindungsgemäßen Komponenten A), B) und C) und mindestens einem Zusatz, ausgewählt aus Füllstoffen, Weichmachern, Fließmitteln, Stabilisatoren, Pigmenten und Flammschutzmitteln.

Gegenstand der vorliegenden Erfindung ist auch ein Verfahren zur Herstellung der erfindungsgemäßen Mischungen, bestehend aus den erfindungsgemäßen Komponenten A), B) und C) und mindestens einem Zusatz, ausgewählt aus Füllstoffen, Weichmachern, Fließmitteln, Stabilisatoren, Pigmenten und Flammschutzmitteln, das dadurch gekennzeichnet ist, daß man vor oder während oder nach der Herstellung der erfindungsgemäßen Mischungen aus den Komponenten A), B) und C) mindestens einen der genannten Zusätze in den für die Komponenten A), B) und C) üblichen Mengen in bekannter Weise einarbeitet.

Die erfindungsgemäßen Mischungen können, in bekannter Weise zu Formkörpern verarbeitet werden, indem man sie beispielsweise auf Spritzgußmaschinen zu verschiedenen Formkörpern verspritzt.

Die erfindungsgemäßen Mischungen finden Anwendung überall dort, wo Formkörper aus glasfaserhaltigem Polycarbonat eingesetzt werden, mit dem Anforderungsprofil großer Steifigkeit und Zähigkeit.

Beispiele 1-5

I) Ein bei 120°C in 24 h getrocknetes aromatisches Polycarbonat mit einer relativen Viskosität $\eta rel$ = 1,28 (0,005 g $cm^{-3}$ in Methylenchlorid, 25°C) wird in einem Doppelwellenextruder bei Temperaturen von 300-320°C aufgeschmolzen.

Dann dosiert man eine Mischung aus Glasfasern und säureanhydrid-haltigem Terpolymer direkt in die Polycarbonatschmelze. Der Polymerstrang wird gekühlt, granuliert und nach für glasfaserverstärkte Polycarbonate üblichen Techniken zu Spritzkörpern verarbeitet.

II) Als Glasfasern werden in den Beispielen Polyurethan- geschlichtete eingesetzt mit einem Durchmesser von 14 µm und einer Länge von 3 mm.

III) Die Herstellung der in den Beispielen verwendeten Terpolymeren erfolgt, indem man Ethylen, Acrylsäurebutylester und Maleinsäureanhydrid in einem Hochdruckprozeß, gegebenenfalls in Anwesenheit geeigneter Katalysatoren, polymerisiert.

| Zusammensetzung der verwendeten Terpolymeren | | | |
|---|---|---|---|
| Terpolymer | Ethylen (Gew.%) | Acrylsäureester (Gew.%) | Maleinsäureanhydrid (Gew.%) |
| A | 83,5 | 10,0 | 6,5 |
| B | 62,8 | 24,6 | 12,6 |
| C | 55,4 | 32,3 | 12,3 |

| Ausgangsmaterial (Gew.%) | | Beispiele 1 | 2 | 3 | 4 | 5 Vergleichs-beispiel |
|---|---|---|---|---|---|---|
| I) Polycarbonat | | 89,5 | 88 | 88 | 88 | 90 |
| II) Glasfaser | | 10 | 10 | 10 | 10 | 10 |
| III) Terpolymer | A | 0,5 | 2 | - | - | - |
| | B | - | - | 2 | - | - |
| | C | - | - | - | 2 | - |

| Ausgangsmaterial (Gew.-%) | Beispiele 6 | 7 | 8 | 9 Vergleichsbeispiel | 10 | 11 | 12 Vergleichsbeispiel | 13 | 14 | 15 Vergleichsbeispiel |
|---|---|---|---|---|---|---|---|---|---|---|
| I) Polycarbonat | 84 | 83 | 82 | 85 | 84 | 83 | 85 | 77,5 | 77 | 80 |
| II) Glasfaser | 15 | 15 | 15 | 15 | 15 | 15 | 15 | 20 | 20 | 20 |
| III) Terpolymer A | 1 | 2 | 3 | - | - | - | - | 2,5 | 3 | - |
| III) Terpolymer C | - | - | - | - | 1 | 2 | - | - | - | - |

Die charakteristischen Eigenschaften sind in der folgenden Tabelle dargestellt:

| | | ηrel | Schlagzähigkeit n. DIN 53453 $kJ/m^2$ | Kerbschlagzähigkeit n. DIN 53453 $kJ/m^2$ | E-Modul Zugversuch n. DIN 53457 MPa | E-Modul Biegeversuch n. DIN 53457 MPa | Vicat B 120 Temp. °C |
|---|---|---|---|---|---|---|---|
| Beispiel | 1 | 1,285 | 90 | 10 | 4200 | 3855 | 145 |
| | 2 | 1,284 | ng | 27 | 4141 | 3900 | 145 |
| | 3 | 1,288 | ng | 27 | 4115 | 3860 | 145 |
| | 4 | 1,282 | ng | 26 | 4000 | 3822 | 144 |
| | 5 | 1,287 | 44 | 8 | 4275 | 3915 | 146 |

ng = nicht gebrochen

Die charakteristischen Eigenschaften sind in der folgenden Tabelle dargestellt:

| | | $\eta_{rel}$ 1) | Schlag-zähigkeit n. DIN 53453 kJ/m² | Kerbschlag-zähigkeit n. DIN 53453 kJ/m² | E-Modul Zugversuch n. DIN 53457 MPa | E-Modul Biegeversuch n. DIN 53457 MPa | Vicat B 120 Temp. °C |
|---|---|---|---|---|---|---|---|
| Beispiel | 6 | 1,281 | ng | 24 | 4954 | 4614 | 146 |
| | 7 | 1,279 | ng | 27 | 4949 | 4664 | 147 |
| | 8 | 1,278 | ng | 26 | 4979 | 4672 | 146 |
| | 9 | 1,279 | 35 | 10 | 5030 | 4633 | 147 |

1) Bestimmt am Prüfstab
ng = nicht gebrochen

Die charakteristischen Eigenschaften sind in der folgenden Tabelle dargestellt:

| | | ηrel 1) | Schlag-zähigkeit n. DIN 53453 kJ/m² | Kerbschlag-zähigkeit n. DIN 53453 kJ/m² | E-Modul Zugversuch n. DIN 53457 MPa | E-Modul Biegeversuch n. DIN 53457 MPa |
|---|---|---|---|---|---|---|
| Beispiel | 10 | 1,282 | ng | 15 | 4961 | 4578 |
| | 11 | 1,285 | ng | 23 | 4851 | 4565 |
| | 12 | 1,280 | 39 | 10 | 5040 | 4571 |
| | 13 | - | ng | 24 | 5938 | 5970 |
| | 14 | - | ng | 24 | 6020 | 5928 |
| | 15 | - | 34 | 13 | 6064 | 5675 |

ng = nicht gebrochen

**Patentansprüche**

**1.** Ternäre Mischungen enthaltend
A) 49.9 bis 96.9 Gew.% an thermoplastischen, aromatischen Polycarbonaten und/oder thermoplastischen, aromatischen Polyester carbonaten,
B) 3 bis 50 Gew.% an Glasfasern und
C) 0,1 bis 10 Gew.% an $C_2$-$C_8$-Olefin-Acrylsäureester-Maleinsäureanhydrid-Terpolymeren, wobei die

Summe der Gew.% der Komponenten A) + B) + C) jeweils 100 Gew.% beträgt.

2. Verfahren zur Herstellung der Mischung des Anspruchs 1, dadurch gekennzeichnet, daß man das Polycarbonat mit den Glasfasern und dem säureanhydridgruppenhaltigen Terpolymeren bei Temperaturen zwischen 260 und 360 °C, schmelzkompoundiert und das erhaltene Gemisch in bekannter Weise abkühlt und granuliert.

3. Mischungen gemäß Anspruch 1, bestehend aus den Komponenten A), B) und C) und mindestens einem Zusatz, ausgewählt aus Füllstoffen, Weichmachern, Fließmitteln, Stabilisatoren, Pigmenten und Flammschutzmitteln.

4. Verfahren zur Herstellung der Mischungen des Anspruchs 3 gemäß Anspruch 2, dadurch gekennzeichnet, daß man vor oder während oder nach der Herstellung der Mischungen aus den Komponenten A), B) und C) mindestens einen Zusatz, ausgewählt aus Füllstoffen, Weichmachern, Fließmitteln, Stabilisatoren, Pigmenten und Flammschutzmitteln in den für die Komponenten A), B) und C) üblichen Mengen in bekannter Weise einarbeitet.